# EUROPEAN PATENT SPECIFICATION

(11) **EP 4 138 239 B1**
(45) Date of publication and mention of the grant of the patent: **01.01.2025**
(21) Application number: 21720796.8
(22) Date of filing: 14.04.2021
(51) Int. Cl.: H02G 3/00, H02G 3/30, F16L 3/223

(54) **SUPPORT BRACKET FOR CABLE TRAYS**
TRAGARM FÜR KABELRINNEN
CONSOLE DE SUPPORT D'UN CHEMIN DE CÂBLES

(30) Priority: 17.04.2020 ES 202030662 U
(43) Date of publication of application: 22.02.2023
(73) Proprietor: Unex Aparellaje Electrico S.L., 08005 Barcelona (ES)
(72) Inventor: MOSTAZO OVIEDO, José Antonio, 08903 L'Hospitalet de Llobregat (ES)
(74) Representative: Curell Suñol S.L.P.
(86) International application number: PCT/ES2021/070244
(87) International publication number: WO 2021/209666

(56) References cited:
- EP-A2- 2 388 876
- EP-B1- 2 388 876
- CN-U- 201 475 498
- CN-U- 201 827 518
- CN-U- 202 580 307
- CN-U- 204 114 354
- FR-A1- 2 437 719
- US-A1- 2011 062 292
- US-S- D 851 482
- US-S- D 851 482

## Description

### Field of the Invention

The invention is comprised in the field of cable tray devices which are used for guiding electric cables, fiber-optic cables, or cables of another type. The invention particularly relates to a support bracket which is fixed to a vertical support surface and intended for supporting a cable tray seated on said support bracket.

More specifically, the invention relates to a support bracket for cable trays, formed by a one-piece body made of a polymer material and comprising:
- a base for fixing said support bracket to a vertical support surface; and
- an arm extending in a cantilever manner from said base and comprising: an upper wall with an oblong upper face extending in a horizontal plane in a horizontal longitudinal direction of said arm, said upper face of the arm forming a seating surface for a cable tray which is seated on said upper face of the arm, said upper wall being provided with through holes for the passage of fixing screws for fixing the cable tray to said support bracket; a lower wall opposite said upper wall; and a central partition joining said upper wall and said lower wall.

### State of the Art

A support bar structure which serves to support cable trays, as well as to directly fix some individual cables or small cable bundles to said support bars, is often built to install cables in a technical space, such as an industrial warehouse, for example. This structure usually comprises vertical support bars which are normally used for fixing support brackets on which cable trays are seated. These support brackets are fixed to the vertical support bars by means of fixing screws. The support brackets can also be fixed to other vertical support surfaces, such as a vertical wall, for example. Fixing screws which traverse the through holes of the upper wall of the arm are used to fix a tray of a cable tray to a support bracket. Normally, each fixing screw is screwed into a nut which rests on the lower face of the upper wall of the arm and must be positioned by the user. This operation of positioning the nut and screwing the fixing screw in said nut is not always an easy one. The placement and fixing of a cable tray on/to a support bracket is often performed in hard-to-access places, with space restrictions and possibly at a great height. To that end, it is important for the installation operations to be performed as easily as possible.

US2011062292A1 discloses a support bracket of the type described in the preamble of claim 1.

CN204114354U, EP2388876A2, FR2437719A1, and USD851482S disclose different kinds of support brackets with through holes in the upper wall.

CN201475498 discloses a support bracket with an upper wall, a lower wall and a central partition.

### Description of the Invention

The purpose of the invention is to provide a support bracket for cable trays of the type indicated above, allowing the installer to more easily perform the operations required for fixing a cable tray to the support bracket, without complicating the manufacture of the support bracket or making it more expensive.

This purpose is achieved by means of a support bracket as defined in claim 1. The through opening thus arranged in the central partition allows the user to introduce his or her finger through same to thereby comfortably access the through holes, below the upper wall of the arm from the two sides of said arm. This considerably facilitates the operation that the user must perform for placing the nut into which the fixing screw is screwed. Furthermore, this configuration allows designing a support bracket in which the through holes take up a centered position in a mid-plane of the arm.

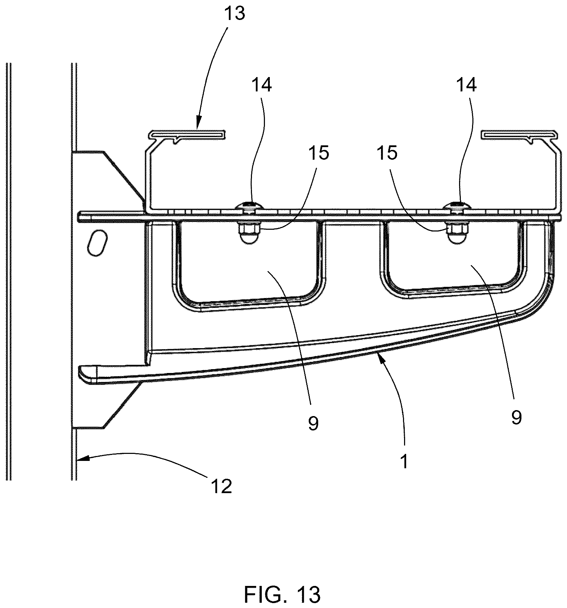

In the present description, the terms "horizontal" and "vertical" must be understood in a usage position of the support bracket, like the one shown in Figure 13, in which the support bracket is fixed by the base thereof to a vertical support surface, such as a vertical support bar like the one shown in said figure, for example. In this usage position, the oblong upper face of the upper wall of the arm is in a horizontal plane.

Preferably, the support bracket is made of an electrically insulating polymer material, such as PVC (polyvinyl chloride), for example, with a surface resistivity exceeding 100 MΩ (surface resistivity measured according to the EN 62631-3-2:2016 standard), and which can optionally be filled with reinforcement fibers.

Preferably, the central partition comprises a transverse wing extending in a cantilever manner on both sides of said central partition and forming a perimetral wall of said through opening. This transverse wing increases the moment of inertia of the arm and thereby compensates for the loss of mechanical strength of the arm caused by the through opening in the central partition. Furthermore, the transverse wing makes it more comfortable for the user to place the nut because the user can rest his or her fingers against the surface of the transverse wing.

Preferably, the transverse wing is continuous and has two ends, each of them attached to the upper wall, such that said transverse wing extends continuously along the entire portion of the perimeter of the through opening arranged in the central partition. The transverse wing thus configured satisfactorily provides the mechanical reinforcement function throughout the entire through opening, and also serves as a support for the user to rest his or her fingers along the entire length of said through opening.

Preferably, the width of the transverse wing, in a direction transverse to the central partition, decreases from each of the two ends of said transverse wing towards a central portion between said two ends. This configuration provides easier access to a central portion of the through opening for the placement of the nut, particularly when the user accesses from a lower position with his or her fingers.

Preferably, said at least one through hole coming into the empty space contained in the through opening is an oblong hole extending on both sides of the central partition in a direction transverse to said central partition. The oblong hole in the transverse direction allows placing the fixing screw in a variable transverse position to align it with the holes available in the cable tray. As a result of the through opening in the central partition, the user can access the corresponding nut with his or her fingers from either of the two sides of the central partition.

The user can thereby manipulate, from one side of the central partition, a nut arranged on the other side of said central partition along the oblong through hole.

Preferably, the support bracket comprises at least two of said through holes coming into the empty space contained in the through opening, said two through holes being separated from one another in the horizontal longitudinal direction of the arm. Therefore, the user has more options for aligning one of these through holes with the holes available in the cable tray.

Preferably, to facilitate the fixing of a cable tray on the support bracket at several points along the arm thereof, the support bracket comprises at least two of said through openings separated from one another in the horizontal longitudinal direction of the arm, each of said through openings being located below at least one of said through holes and containing said empty space into which said through hole comes.

The invention also comprises other detail features shown in the following detailed description of an embodiment of the invention and in the attached figures.

### Brief Description of the Drawings

The advantages and features of the invention are apparent from the following description in which preferred embodiments of the invention are described in a non-limiting manner with respect to the scope of the main claim in reference to the figures.
Figures 1, 2, and 3 are perspective views of a first embodiment of the support bracket from different angles.
Figures 4, 5, 6, and 7 are a side view, a top view, a rear view, and a front view, respectively, of the support bracket.
Figure 8 is a side view such as that of Figure 4, in which the empty spaces contained in the through openings have been indicated with a discontinuous line.
Figure 9 is a sectioned perspective view of the support bracket.
Figure 10 is a sectioned perspective view of the support bracket, with the same plane of section as Figure 9 but from the other side of the plane of section.
Figure 11 is a perspective view of the support bracket fixed to a vertical support bar.
Figures 12 and 13 are a perspective view and a side view, respectively, of the assembly shown in Figure 11, with a cable tray seated on the support bracket and fixed thereto by means of fixing screws.
Figures 14 and 15 are a perspective view and a side view, respectively, of a second embodiment of the support bracket.
Figures 16 and 17 are a perspective view and a side view, respectively, of a third embodiment of the support bracket.

### Detailed Description of Embodiments of the Invention

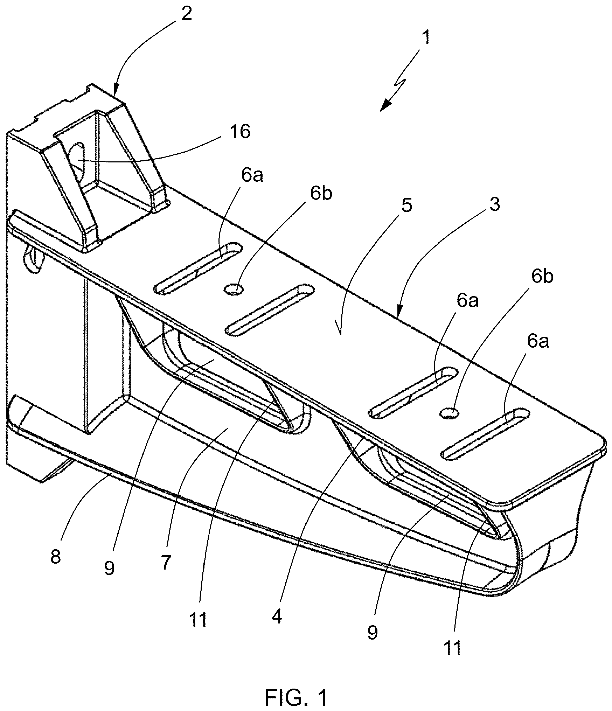

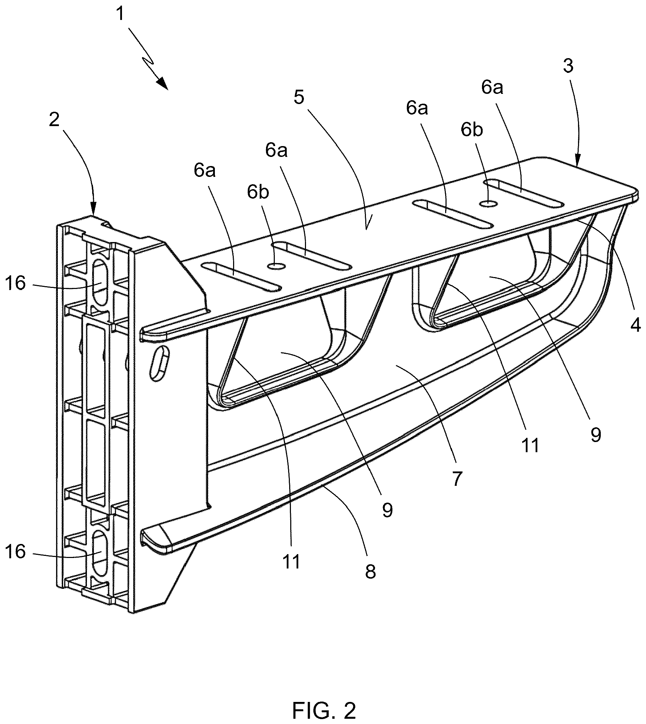

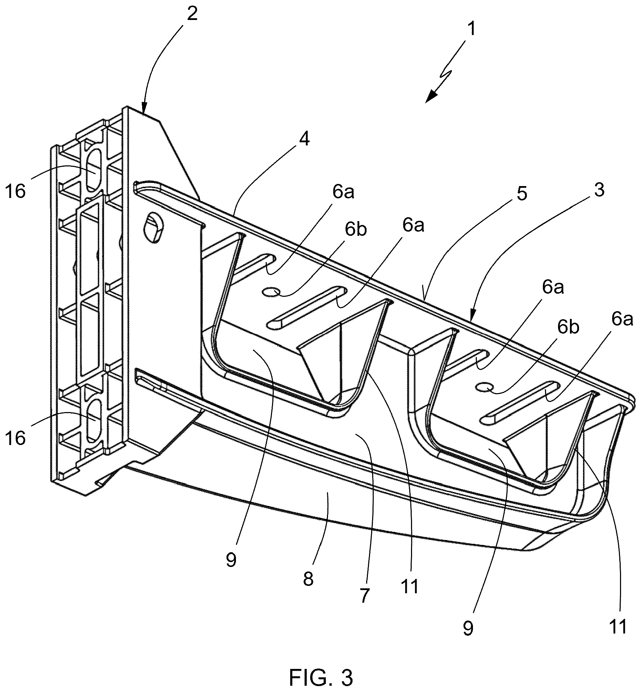

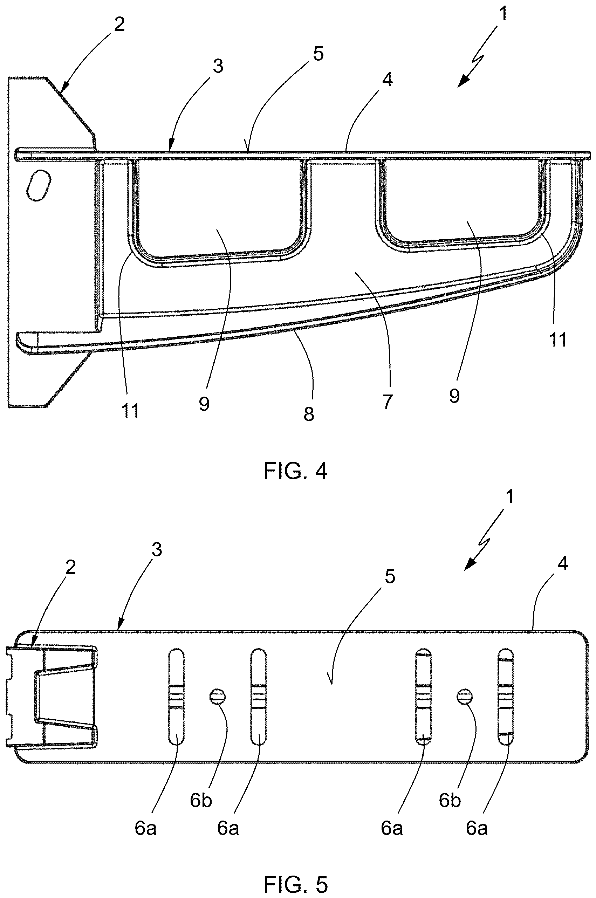

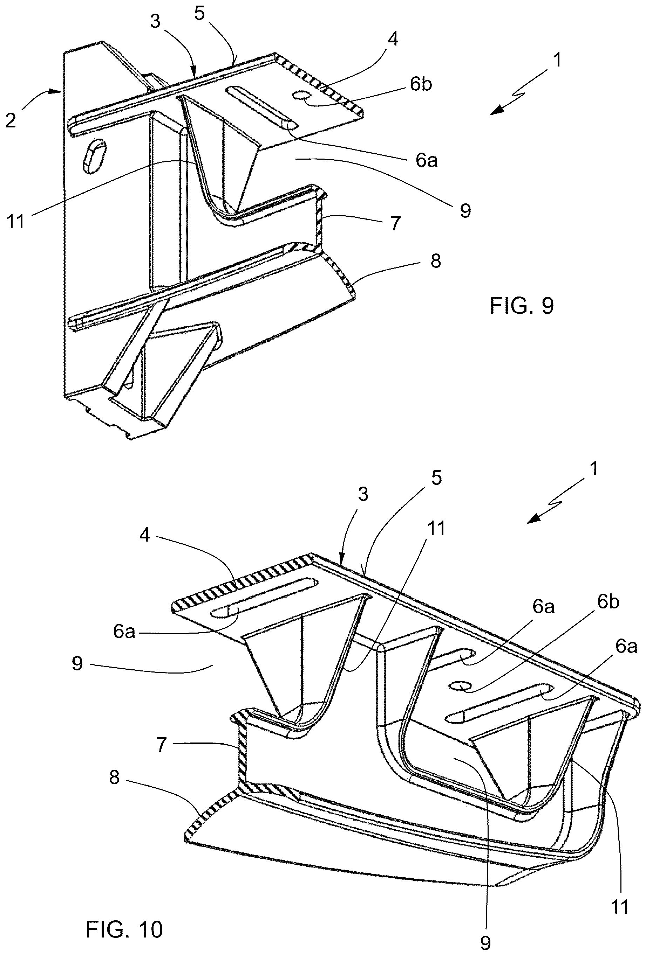

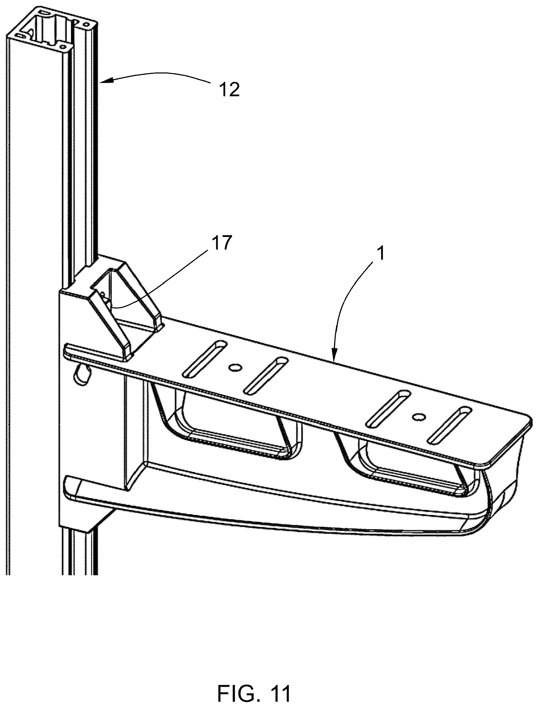

Figures 1 to 10 show a first embodiment of the support bracket according to the invention. The support bracket 1 is formed by a one-piece body made of a polymer material obtained by molding. The polymer material from which the support bracket 1 is molded is an electrically insulating material. The polymer material can be a thermoplastic such as PVC or a thermosetting resin, for example. The support bracket 1 is mainly intended for being fixed to a vertical support surface, such as the bar 12 shown in Figures 11 to 13 or other bar types, for example. The support bracket 1 can also be fixed to other vertical support surfaces, such as a vertical wall, for example.

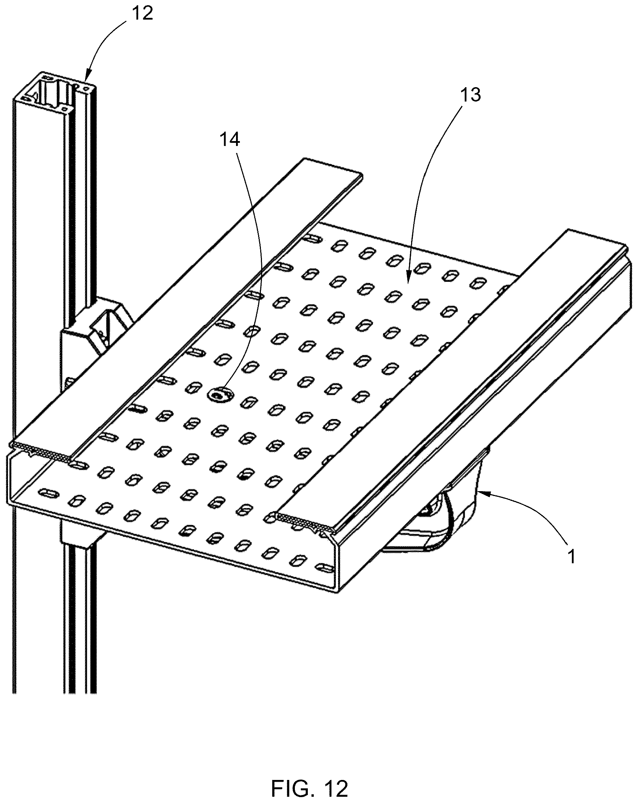

The support bracket 1 comprises a base 2 for fixing said support bracket 1 to a vertical support surface, such as the vertical support bar 12 shown in Figures 11 to 13, for example, and an arm 3 extending in a cantilever manner from said base 2 and intended for supporting a cable tray, such as the cable tray 13 shown in Figures 12 and 13, for example, which is seated on said arm 3. The base 2 can have shapes other than the ones shown in the figures, suitable for fixing the support bracket 1 to different types of vertical support surface. The arm 3 comprises an upper wall 4 with an oblong upper face 5 extending in a horizontal plane in a horizontal longitudinal direction of said arm 3, a lower wall 8 opposite said upper wall 4, and a central partition 7 joining said upper wall 4 and said lower wall 8. The oblong upper face 5 forms a seating surface for a cable tray which is seated on said upper face 5. The upper wall 4 is provided with through holes 6a, 6b for the passage of fixing screws for fixing a cable tray to the support bracket 1. In the first embodiment shown in the figures, the upper wall 4 has oblong through holes 6a extending on both sides of the central partition 7 in a direction transverse to said central partition 7, and circular through holes 6b. The oblong through holes 6a are grouped in two pairs. The two oblong through holes 6a of each pair are separated from one another in the horizontal longitudinal direction of the arm 3, and a circular through hole 6b is arranged between them. Particularly, the oblong through holes 6a can advantageously be used for fixing to the support bracket 1 a cable tray 13 like the one shown in Figures 12 and 13, having a continuous bottom wall provided with holes uniformly distributed therein. The oblong nature of the through holes 6a allows one of them to be more readily aligned with one of the holes of the cable tray 13 for passing the fixing screw 14 therethrough. Particularly, the circular through holes 6b can be used for fixing to the support bracket 1 a ladder-type cable tray, formed by two parallel longitudinal members joined by a series of cross members forming a discontinuous bottom wall. In this case, a securing device is often used, said device being fixed to the support bracket 1 by means of a screw or another fixing element through the circular through hole 6b and applying pressure on a cross member of the cable ladder.

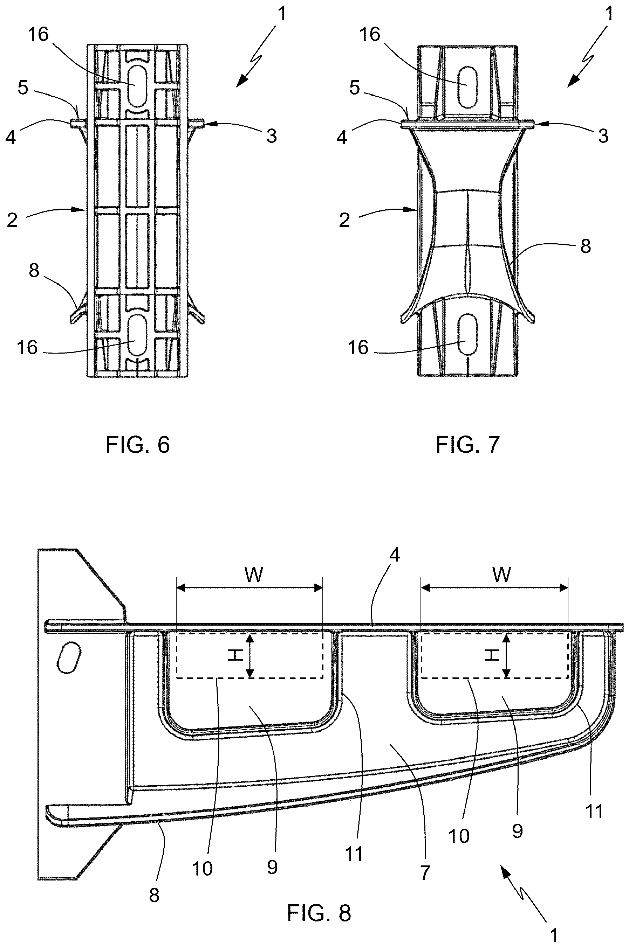

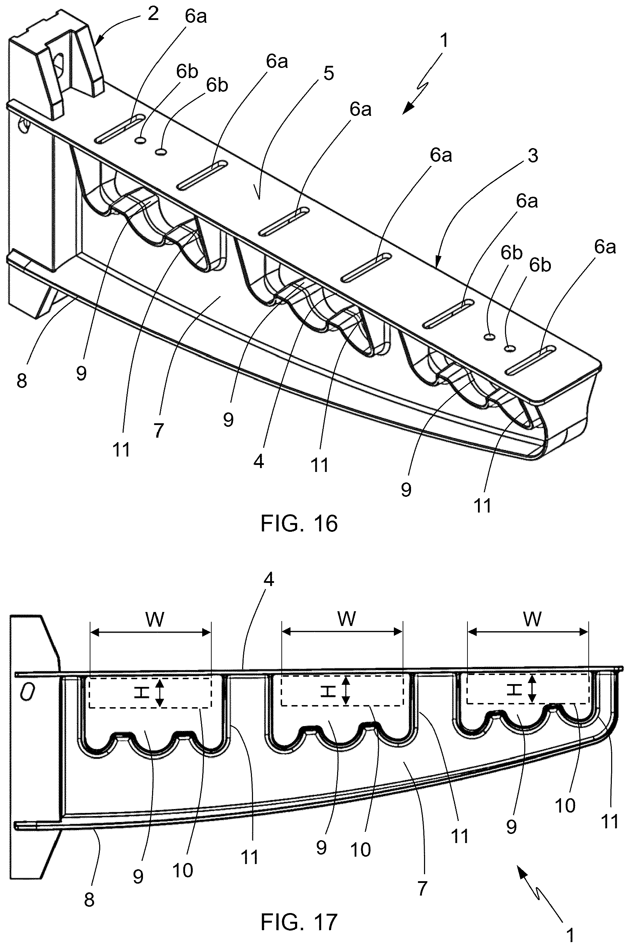

The central partition 7 has two through openings 9 adjacent to the upper wall 4. Each of these two through openings 9 is located below a group formed by two oblong through holes 6a and a circular through hole 6b arranged between them and contains an empty space 10 into which the three through holes 6a, 6b of the group come. In order for the user to be able to easily introduce his or her fingers in the through opening 9 to place a nut 15, the empty space 10 into which the through holes 6a, 6b come is a rectangular parallelepiped with a width W, in the horizontal longitudinal direction of the arm 3, greater than or equal to 4 cm, and a height H, in a vertical direction orthogonal to said horizontal longitudinal direction, greater than or equal to 2 cm. The empty space 10 of each through opening 9 has been indicated with a discontinuous line in Figure 8. In the first embodiment shown in the figures, the empty space 10 has a width W of 8 cm and a height H of 3 cm. The central partition 7 comprises, in each through opening 9, a transverse wing 11 extending in a cantilever manner on both sides of said central partition 7 forming a perimetral wall of said through opening 9. The transverse wing 11 is continuous from one of the ends thereof attached to the upper wall 4 to the other one of the ends thereof also attached to said upper wall 4. The transverse wing 11 thereby extends continuously along the entire portion of the perimeter of the through opening 9 arranged in the central partition 7. The width of the transverse wing 11, in a direction transverse to the central partition 7, decreases from each of the two ends thereof towards a central portion between said two ends. In the first embodiment shown in the figures, each through opening 9 has an overall rectangular shape, with a lower side facing the upper wall 4 and slightly inclined with respect to same, and two lateral sides extending from the upper wall 4 orthogonal thereto and forming rounded corners with the lower side. This particular shape of the through opening 9 results from a design choice made taking into account esthetic, not technical, criteria, where many different shapes such as, for example, the shape of the third embodiment shown in Figures 16 and 17, have been taken into consideration among other possible designs. On the lower side of the through opening 9, the transverse wing 11 has a constant width, and this width increases progressively from the corners and along the two lateral sides until intersecting with the upper wall 4, where said width is maximum and is almost the same as the width of the upper wall 4. The lower wall 8 forms a rounded elbow and is joined to the upper wall 4 at the free end of the arm 3.

Figure 11 shows, by way of example, the support bracket 1 fixed to a vertical support bar made up of a profile extruded from a polymer material. In this case, fixing is performed by means of screws 17 that go through through holes 16 provided in the base 2. By way of example, Figures 12 and 13 show a cable tray 13 fixed to the support bracket 1. The cable tray 13 is seated on the upper face 5 of the arm 3 and fixed thereto by means of fixing screws 14 going through some of the through holes 6a, 6b of the upper wall 4 of said arm 3. Each fixing screw 14 is screwed into a nut 15 arranged against the lower face of the upper wall 4.

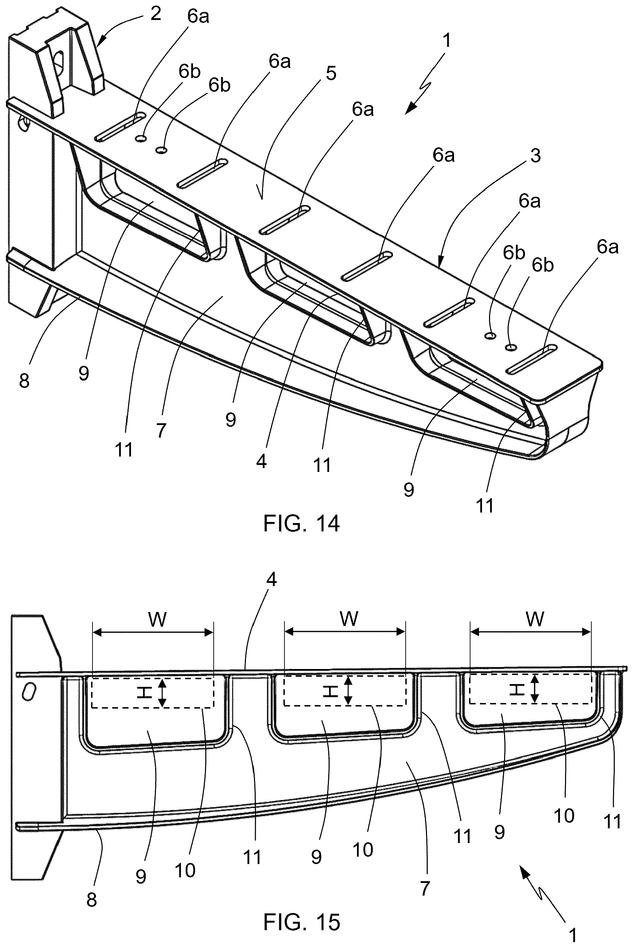

Figures 14 and 15 show a second embodiment of the support bracket 1. This second embodiment differs from the first embodiment essentially in that the arm 3 is longer and has three through openings 9, and in that the through holes 6a, 6b are distributed in a different way.

Figures 16 and 17 show a third embodiment of the support bracket 1 differing from the second embodiment only by the shape of the through openings 9. In this case, the lower side of the through openings 9 is not straight, but rather is wavy.

## Claims

1. A support bracket (1) for cable trays, said support bracket (1) being formed by a one-piece body made of a polymer material and comprising:
- a base (2) for fixing said support bracket (1) to a vertical support surface; and
- an arm (3) extending in a cantilever manner from said base (2) and comprising: an upper wall (4) with an oblong upper face (5) extending in a horizontal plane in a horizontal longitudinal direction of said arm (3), with respect to a usage position of said support bracket (1) in which said support bracket (1) is fixed by said base (2) to said vertical support surface, said upper face (5) of the arm (3) forming a seating surface for a cable tray which is seated on said upper face (5) of the arm;
a lower wall (8) opposite said upper wall (4); and a central partition (7) joining said upper wall (4) and said lower wall (8);
wherein said central partition (7) has at least one through opening (9) adjacent to said upper wall (4); **characterised in that** said upper wall (4) is provided with through holes (6a, 6b) for the passage of fixing screws for fixing the cable tray to said support bracket (1); and said at least one through opening (9) is located below at least one of said through holes (6a, 6b), such that said through opening (9) contains an empty space (10) into which said through hole (6a, 6b) comes, said empty space (10) being a rectangular parallelepiped with a width (W), in said horizontal longitudinal direction of the arm (3), greater than or equal to 4 cm, and a height (H), in a vertical direction orthogonal to said horizontal longitudinal direction, greater than or equal to 2 cm.

2. The support bracket (1) according to claim 1, **characterized in that** said central partition (7) comprises a transverse wing (11) extending in a cantilever manner on both sides of said central partition (7) and forming a perimetral wall of said through opening (9).

3. The support bracket (1) according to claim 2, **characterized in that** said transverse wing (11) is continuous and has two ends, each of which is attached to said upper wall (4), such that said transverse wing (11) extends continuously along the entire portion of the perimeter of said through opening (9) located in said central partition (7).

4. The support bracket (1) according to claim 3, **characterized in that** the width of said transverse wing (11), in a direction transverse to said central partition (7), decreases from each of said two ends towards a central portion between said two ends.

5. The support bracket (1) according to any one of claims 1 to 4, **characterized in that** said at least one through hole (6a) coming into said empty space (10) contained in said through opening (9) is an oblong hole extending on both sides of said central partition (7) in a direction transverse to said central partition (7).

6. The support bracket (1) according to any one of claims 1 to 5, **characterized in that** it comprises at least two of said through holes (6a, 6b) coming into said empty space (10) contained in said through opening (9), said two through holes (6a, 6b) being separated from one another in said horizontal longitudinal direction of the arm (3).

7. The support bracket (1) according to any one of claims 1 to 6, **characterized in that** it comprises at least two of said through openings (9) separated from one another in said horizontal longitudinal direction of the arm (3), each of said through openings (9) being located below at least one of said through holes (6a, 6b) and containing said empty space (10) into which said through hole (6a, 6b) comes.

## Patentansprüche

1. Stützwinkel (1) für Kabelrinnen, wobei der Stützwinkel (1) durch einen einteiligen Körper gebildet wird, der aus einem Polymermaterial hergestellt ist, und Folgendes umfasst:
- eine Basis (2) zum Befestigen des Stützwinkels (1) an einer vertikalen Stützfläche; und
- einen Arm (3), der sich auf eine freitragende Weise von der Basis (2) aus erstreckt und Folgendes umfasst: eine obere Wand (4) mit einer länglichen oberen Fläche (5), die sich in einer horizontalen Ebene in einer horizontalen Längsrichtung des Arms (3) erstreckt, in Bezug auf eine Nutzungsposition des Stützwinkels (1), in welcher der Stützwinkel (1) durch die Basis (2) an der vertikalen Stützfläche befestigt ist, wobei die obere Fläche (5) des Arms (3) eine Aufsitzfläche für eine Kabelrinne bildet, die auf der oberen Fläche (5) des Arms aufsitzt, eine untere Wand (8) gegenüber der oberen Wand (4) und eine mittige Trennwand (7), welche die obere Wand (4) und die untere Wand (8) verbindet,
wobei die mittige Trennwand (7) mindestens eine Durchgangsöffnung (9) angrenzend an die obere Wand (4) aufweist, **dadurch gekennzeichnet, dass** die obere Wand (4) mit Durchgangslöchern (6a, 6b) für den Durchgang von Befestigungsschrauben zum Befestigen der Kabelrinne an dem Stützwinkel (1) versehen ist; und dass die mindestens eine Durchgangsöffnung (9) derart unterhalb mindestens eines der Durchgangslöcher (6a, 6b) angeordnet ist, dass die Durchgangsöffnung (9) einen leeren Raum (10) enthält, in den das Durchgangsloch (6a, 6b) führt, wobei der leere Raum (10) ein rechtwinkliges Parallelepiped mit einer Breite (W), in der horizontalen Längsrichtung des Arms (3), größer als oder gleich 4 cm, und einer Höhe (H), in einer vertikalen Richtung, senkrecht zu der horizontalen Längsrichtung, größer als oder gleich 2 cm, ist.

2. Stützwinkel (1) nach Anspruch 1, **dadurch gekennzeichnet, dass** die mittige Trennwand (7) einen quer verlaufenden Flügel (11) umfasst, der sich auf eine freitragende Weise auf beiden Seiten der mittigen Trennwand (7) erstreckt und eine umlaufende Wand der Durchgangsöffnung (9) bildet.

3. Stützwinkel (1) nach Anspruch 2, **dadurch gekennzeichnet, dass** der quer verlaufende Flügel (11) durchgehend ist und zwei Enden aufweist, deren jedes derart an der oberen Wand (4) befestigt ist, dass sich der quer verlaufende Flügel (11) durchgehend entlang des gesamten Abschnitts des Umfangs der Durchgangsöffnung (9) erstreckt, die in der mittigen Trennwand (7) angeordnet ist.

4. Stützwinkel (1) nach Anspruch 3, **dadurch gekennzeichnet, dass** die Breite des quer verlaufenden Flügels (11), in einer Richtung, quer zu der mittigen Trennwand (7), von jedem der zwei Enden aus zu einem mittigen Abschnitt zwischen den zwei Enden hin abnimmt.

5. Stützwinkel (1) nach einem der Ansprüche 1 bis 4, **dadurch gekennzeichnet, dass** das mindestens eine Durchgangsloch (6a), das in den leeren Raum (10) führt, der in der Durchgangsöffnung (9) enthalten ist, ein längliches Loch ist, das sich auf beiden Seiten der mittigen Trennwand (7) in einer Richtung, quer zu der mittigen Trennwand (7), erstreckt.

6. Stützwinkel (1) nach einem der Ansprüche 1 bis 5, **dadurch gekennzeichnet, dass** er mindestens zwei der Durchgangslöcher (6a, 6b) umfasst, die in den leeren Raum (10) führen, der in der Durchgangsöffnung (9) enthalten ist, wobei die zwei Durchgangslöcher (6a, 6b) in der horizontalen Längsrichtung des Arms (3) voneinander getrennt sind.

7. Stützwinkel (1) nach einem der Ansprüche 1 bis 6, **dadurch gekennzeichnet, dass** er mindestens zwei der Durchgangsöffnungen (9) umfasst, die in der horizontalen Längsrichtung des Arms (3) voneinander getrennt sind, wobei jede der Durchgangsöffnungen (9) unterhalb mindestens eines der Durchgangslöcher (6a, 6b) angeordnet ist und den leeren Raum (10) enthält, in den das Durchgangsloch (6a, 6b) führt.

## Revendications

1. Équerre de support (1) pour des chemins de câbles, ladite équerre de support (1) étant formée par un corps d'une seule pièce fait d'un matériau polymère et comprenant:
- une base (2) pour fixer ladite équerre de support (1) à une surface de support verticale ; et
- un bras (3) s'étendant en porte-à-faux à partir de ladite base (2) et comprenant: une paroi supérieure (4) avec une face supérieure (5) oblongue s'étendant dans un plan horizontal dans une direction longitudinale horizontale dudit bras (3), par rapport à une position d'utilisation de ladite équerre de support (1) dans laquelle ladite équerre de support (1) est fixée par ladite base (2) à ladite surface de support verticale, ladite face supérieure (5) du bras (3) formant une surface d'assise pour un chemin de câbles qui s'assoit sur ladite face supérieure (5) du bras;
une paroi inférieure (8) opposée à ladite paroi supérieure (4); et une cloison centrale (7) réunissant ladite paroi supérieure (4) et ladite paroi inférieure (8);
dans laquelle ladite cloison centrale (7) a au moins une ouverture traversante (9) adjacente à ladite paroi supérieure (4); **caractérisée en ce que** ladite paroi supérieure (4) est dotée de trous traversants (6a, 6b) pour le passage de vis de fixation pour fixer le chemin de câbles à ladite équerre de support (1); et ladite au moins une ouverture traversante (9) est située en dessous d'au moins un desdits trous traversants (6a, 6b), de sorte que ladite ouverture traversante (9) contienne un espace vide (10) dans lequel ledit trou traversant (6a, 6b) débouche, ledit espace vide (10) étant un parallélépipède rectangle avec une largeur (W), dans ladite direction longitudinale horizontale du bras (3), supérieure ou égale à 4 cm, et une hauteur (H), dans une direction verticale orthogonale à ladite direction longitudinale horizontale, supérieure ou égale à 2 cm.

2. Équerre de support (1) selon la revendication 1, **caractérisée en ce que** ladite cloison centrale (7) comprend une aile transversale (11) s'étendant en porte-à-faux sur les deux côtés de ladite cloison centrale (7) et formant une paroi périmétrale de ladite ouverture traversante (9).

3. Équerre de support (1) selon la revendication 2, **caractérisée en ce que** ladite aile transversale (11) est continue et a deux extrémités, chacune d'elles étant fixée à ladite paroi supérieure (4), de sorte que ladite aile transversale (11) s'étende de manière continue le long de la partie entière du périmètre de ladite ouverture traversante (9) située dans ladite cloison centrale (7).

4. Équerre de support (1) selon la revendication 3, **caractérisée en ce que** la largeur de ladite aile transversale (11), dans une direction transversale par rapport à ladite cloison centrale (7), diminue à partir de chacune desdites deux extrémités vers une partie centrale entre lesdites deux extrémités.

5. Équerre de support (1) selon l'une quelconque des revendications 1 à 4, **caractérisée en ce que** ledit au moins un trou traversant (6a) débouchant dans ledit espace vide (10) contenu dans ladite ouverture traversante (9) est un trou oblong s'étendant sur les deux côtés de ladite cloison centrale (7) dans une direction transversale par rapport à ladite cloison centrale (7).

6. Équerre de support (1) selon l'une quelconque des revendications 1 à 5, **caractérisée en ce qu'**elle comprend au moins deux desdits trous traversants (6a, 6b) débouchant dans ledit espace vide (10) contenu dans ladite ouverture traversante (9), lesdits deux trous traversants (6a, 6b) étant séparés l'un de l'autre dans ladite direction longitudinale horizontale du bras (3).

7. Équerre de support (1) selon l'une quelconque des revendications 1 à 6, **caractérisée en ce qu'**elle comprend au moins deux desdites ouvertures traversantes (9) séparées l'une de l'autre dans ladite direction longitudinale horizontale du bras (3), chacune desdites ouvertures traversantes (9) étant située en dessous d'au moins un desdits trous traversants (6a, 6b) et contenant ledit espace vide (10) dans lequel ledit trou traversant (6a, 6b) débouche.
